(19) Europäisches Patentamt
European Patent Office
Office européen des brevets

(11) EP 1 301 546 B1

(12) # EUROPÄISCHE PATENTSCHRIFT

(45) Veröffentlichungstag und Bekanntmachung des Hinweises auf die Patenterteilung:
**12.05.2004 Patentblatt 2004/20**

(21) Anmeldenummer: **01967167.6**

(22) Anmeldetag: **13.07.2001**

(51) Int Cl.$^7$: **C08F 10/10**, C08F 6/02, C08F 4/14

(86) Internationale Anmeldenummer:
**PCT/EP2001/008109**

(87) Internationale Veröffentlichungsnummer:
**WO 2002/006359 (24.01.2002 Gazette 2002/04)**

(54) **VERFAHREN ZUR HERSTELLUNG VON POLYISOBUTENEN**
METHOD FOR PRODUCING POLYISOBUTYLENES
PROCEDE DE PRODUCTION DE POLYISOBUTENES

(84) Benannte Vertragsstaaten:
**AT BE CH CY DE DK ES FI FR GB GR IE IT LI LU MC NL PT SE TR**

(30) Priorität: **18.07.2000 DE 10035298**

(43) Veröffentlichungstag der Anmeldung:
**16.04.2003 Patentblatt 2003/16**

(73) Patentinhaber: **BASF AKTIENGESELLSCHAFT**
**67056 Ludwigshafen (DE)**

(72) Erfinder:
- **WETTLING, Thomas**
  **67117 Limburgerhof (DE)**
- **BORCHERS, Dirk**
  **B-2950 Kapellen (BE)**
- **VERRELST, Wim**
  **B-2650 Edegem (BE)**
- **RATH, Hans, Peter**
  **67269 Grünstadt (DE)**

(56) Entgegenhaltungen:
**EP-A- 0 628 575**
**EP-A- 0 791 557**
**WO-A-01/30868**
**US-A- 2 291 510**
**US-A- 5 196 630**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 301 546 B1

## Beschreibung

Die vorliegende Erfindung betrifft ein Verfahren zur Herstellung von Polyisobutenen durch kationische Polymerisation von Isobuten oder isobutenhaltigen Kohlenwasserstoffströmen in der flüssigen Phase in Gegenwart von Bortrifluorid als Katalysator, wobei man die katalytische Wirksamkeit des Bortrifluorids zu einem gewünschten Zeitpunkt mittels eines festen Desaktivators aufhebt.

Hochmolekulare Polyisobutene mit Molekulargewichten bis zu mehreren 100 000 Dalton sind seit langem bekannt, und ihre Herstellung wird beispielsweise in H. Güterbock: Polyisobutylen und Mischpolymerisate, S. 77 bis 104, Springer Verlag, Berlin 1959, beschrieben. Von diesen herkömmlichen Polyisobutenen sind die sogenannten hochreaktiven Polyisobutene zu unterscheiden, welche in der Regel mittlere Molekulargewichte von 500 bis 50000 Dalton und einen hohen Gehalt an endständigen Doppelbindungen, sogenannten Vinylidengruppierungen, von vorzugsweise deutlich über 60 mol-% haben.

Solche hochreaktive Polyisobutene werden als Zwischenprodukte für die Herstellung von Additiven für Schmier- und Kraftstoffe verwendet, wie sie beispielsweise in der DE-A 27 02 604 beschrieben sind. Zur Herstellung dieser Additive werden zunächst durch Reaktion der endständigen Doppelbindungen des Polyisobutens mit Maleinsäureanhydrid Polyisobuten-Maleinsäureanhydrid-Addukte, insbesondere Polyisobutenyl-Bernsteinsäureanhydride erzeugt, welche anschließend mit bestimmten Aminen zum fertigen Additiv umgesetzt werden. Der Anteil an endständigen Vinylidengruppierungen im Molekül ist eines der wichtigsten Qualitätskriterien für diesen Polyisobutentypus, da bei der Adduktbildung mit Maleinsäureanhydrid hauptsächlich die endständigen Vinylidengruppierungen reagieren, wohingegen die weiter im Inneren der Makromoleküle liegenden Doppelbindungen je nach ihrer Lage im Makromolekül ohne die Zugabe von Halogenen zu keinem oder zu einem deutlich geringeren Umsatz führen.

Wie man sich das Zustandekommen der endständigen Vinylidengruppierungen und die Isomerisierung der endständigen Doppelbindungen in den Isobutenmakromolekülen zu internen Doppelbindungen vorzustellen hat, kann etwa dem Artikel von Puskas et al., J. Polymer Sci.: Symposium No. 56, 191 (1976) oder der EP-A 628 575 entnommen werden. Die dabei ablaufenden Protonierungen, Deprotonierungen und Umlagerungen sind Gleichgewichtsreaktionen, bei denen die Ausbildung höher alkylsubstituierter Kationen thermodynamisch begünstigt ist. Die genannten Reaktionen werden in der Regel durch Säurespuren, insbesondere durch den üblicherweise Lewis-sauren Katalysator der Polymerisation selbst gefördert.

Ein weiteres Qualitätskriterium für Polyisobutene mit dem genannten Verwendungszweck ist deren mittleres Molekulargewicht ($M_N$).

Auch die Molekulargewichtsverteilung (Dispersität, D) der Polyisobutenmakromoleküle ist für den genannten Zweck ein Qualitätskriterium, denn je breiter sie ist, d.h., je größer die Streuung der Molekulargewichte der Polyisobutenmakromoleküle ist, umso weniger sind die Produkte häufig für den obengenannten Zweck geeignet.

Der Fachmann kennt bereits eine Reihe von Verfahren zur Herstellung von reaktiven Polyisobutenen aus Isobuten mit mittleren Molekulargewichten und Dispersitäten, die den genannten Anforderungen genügen und bei denen man Bortrifluorid als Katalysator verwendet.

Bortrifluorid setzt man dabei überwiegend in Form von Donor-Komplexen, insbesondere mit Wasser, Alkoholen, Phenolen, Carbonsäuren, Carbonsäureanhydriden, Fluorwasserstoff, Ethern oder Gemischen dieser Verbindungen ein. Bortrifluorid ist dabei als solches oder in Form der genannten Komplexe ein selbst bei tiefen Temperaturen ausgesprochen wirksamer Katalysator (vgl. z.B. DE-A 27 02 604, EP-A 145 235 oder EP-A 322 241).

Will man daher die durch Bortrifluorid katalysierte Umsetzung des Isobutens abbrechen, nachdem sich ein definierter Umsatz und/oder eine definierte Selektivität hinsichtlich der polymeren Produkte eingestellt hat, so muss man das Bortrifluorid in der Regel schnell und vollständig desaktivieren. Diese Desaktivierung besteht zumeist darin, dass man das Bortrifluorid mit flüssigen oder mit im Reaktionsmedium löslichen Stoffen zersetzt oder derart in andere Donorkomplexe überführt, dass es dem Reaktionsgeschehen praktisch vollständig entzogen ist.

Für eine solche komplexierende Desaktivierung des Bortrifluorids mit organisch-chemischen Desaktivatoren in flüssiger Phase kommen im Stand der Technik beispielsweise Alkohole und Acetonitril zum Einsatz (vgl. z.B. DE-A 43 06 384, EP-A 145 235).

Gemeinsam ist den bekannten Methoden zur Desaktivierung des Bortrifluorid, dass sie die Beseitigung oder Aufarbeitung großer Mengen an Flüssigkeiten erforderlich machen, die mit Bortrifluorid, seinen Abbauprodukten und/oder organischen Verbindungen befrachtet sind. Bei der Verwendung von Alkoholen für die Desaktivierung kann es zudem durch Reaktion mit dem Bortrifluorid zur Bildung von korrosivem Flourwasserstoff kommen, was die Verwendung von hochwertigen und kostspieligen Materialien bei der Auslegung der verwendeten Apparaturen erforderlich macht.

Angesichts dieser Sachlage wurden bereits Problemlösungen mit festen Desaktivatoren für das Bortrifluorid entwickelt.

Die US-A 4,384,162 schlägt hierzu vor, der Reaktionslösung das Bortrifluorid mittels festem Polyvinylalkohol zu entziehen. Das Verfahren hat jedoch den Nachteil, dass es den Anforderungen für die Polymerisation von Isobuten

nicht genügt, weil das Bortrifluorid trotz der Adsorption auf dem Polyvinylalkohol seine Aktivität teilweise beibehält und infolge dessen unerwünschte im Nachhinein noch Oligomere gebildet werden können.

Aus der US-A 4,433,197 ist bekannt, zu dem gleichen Zweck Silicagel einzusetzen. Jedoch ist auch diese Desaktivierung nicht hinreichend vollständig. Die US-A 4,213,001 lehrt sogar die Verwendung von Bortrifluorid/Silicagel als Katalysator für die Oligomerisierung von 1-Olefinen, was anzeigt, dass das Bortrifluorid auch noch nach der Adsorption katalytisch aktiv ist.

Der vorliegenden Erfindung lag daher die Aufgabe zugrunde, ein Verfahren für die Herstellung von hochreaktivem Polyisobuten aus Isobuten in Gegenwart von Bortrifluorid als Katalysator bereitzustellen, das sich eines festen Desaktivators für das Bortrifluorid bedient, welcher das Bortrifluorid wirksamer als die bekannten derartigen Desaktivatoren dem Reaktionsgeschehen entzieht.

Diese Aufgabe wird gelöst durch ein Verfahren zur Herstellung von Polyisobutenen durch kationische Polymerisation von Isobuten oder isobutenhaltigen Kohlenwasserstoffströmen in der flüssigen Phase in Gegenwart von Bortrifluorid als Katalysator, wobei man die katalytische Wirksamkeit des Bortrifluorids zu einem gewünschten Zeitpunkt mittels eines festen Desaktivators teilweise oder vollständig aufhebt, welches dadurch gekennzeichnet ist, dass der feste Desaktivator Bortrifluorid bindende primäre, sekundäre, tertiäre und/oder quarternäre Stickstoffatome aufweist und im Reaktionsgemisch unlöslich ist.

Unter endständigen Vinylidengruppierungen oder endständigen Doppelbindungen werden hierin solche Doppelbindungen verstanden, deren Lage im Polyisobutenmakromolekül durch die allgemeine Formel I

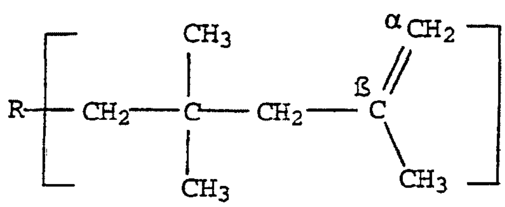

I

beschrieben wird, in welcher R für den übrigen Teil des Polyisobutylenmakromoleküls steht. Die Art und der Anteil der vorhandenen Doppelbindungen kann mit Hilfe der $^{13}C$-NMR-Spektroskopie bestimmt werden, wobei die beiden in der Formel I mit $\alpha$ und $\beta$ markierten Kohlenstoffatome der endständigen Doppelbindung im $^{13}C$-NMR-Spektrum durch ihre Signale bei der chemischen Verschiebung von 114,4 bzw. 143,6 relativ zu Tetramethylsilan identifizierbar sind. Der Anteil der endständigen Doppelbindungen bezüglich anderer Arten von Doppelbindungen wird ermittelt, indem man die Peakflächen der einzelnen Olefinsignale jeweils ins Verhältnis setzt zum Gesamtflächenintegral der Olefinsignale.

Die mit dem erfindungsgemäßen Verfahren erhältlichen hochreaktiven Polyisobutene weisen im Allgemeinen deutlich über 60, vorzugsweise von 75 bis 100 und vor allem von 80 bis 95 mol-% Vinylidengruppierungen auf.

Als mittleres Molekulargewicht wird hierin das Zahlenmittel $M_N$ des Molekulargewichts bezeichnet, das beispielsweise mit Hilfe der Gelpermeationschromatographie, durch Ozonolyse oder mittels Dampfdruckosmometrie bestimmt werden kann.

Die mit dem erfindungsgemäßen Verfahren erhältlichen hochreaktiven Isobutene weisen im Allgemeinen mittlere Molekulargewichte von 300 bis 50000, vorzugsweise von 500 bis 30000 und insbesondere von 500 bis 25000 Dalton auf.

Zur Herstellung hochreaktiver Polyisobutene aus Isobuten in Gegenwart von Bortrifluorid wird normalerweise entweder die benötigte Menge an vorgebildeter Bortrifluorid-Komplex-Lösung oder -Suspension im Isobuten verteilt oder es wird alternativ der Katalysator in situ erzeugt, indem man gasförmiges Bortrifluorid in eine Mischung aus Isobuten und dem Komplexbildner für das Bortrifluorid einleitet. Das katalytisch aktive System aus Bortrifluorid und dem Komplexbildner, das auf einem der genannten Wege entsteht, wird im Folgenden als "Katalysatorsystem" bezeichnet.

Im Sinne des erfindungsgemäßen Verfahrens eignen sind als Komplexbildner für das Bortrifluorid Alkohole wie Isopropanol und vorzugsweise Methanol (vgl. die EP-A 628 575) sowie tertiäre Ether.

Üblicherweise wird das Katalysatorsystem in Mengen von 0,05 bis 1 Gew.-%, bezogen auf das Gewicht des eingesetzten Isobutens verwendet. Die Bruttoreaktionsgeschwindigkeit ist dabei in der Regel von der eingesetzten Menge des Katalysatorsystems abhängig, vor allem aber vom Molverhältnis des eingesetzten Katalysatorsystems.

Als Isobuten-haltiges Ausgangsmaterial (im Folgenden "Isobuten-Feedstock" genannt) können in dem der Desaktivierung des Bortrifluorids vorangehenden Syntheseschritt reines Isobuten aber auch Gemische von Isobuten mit anderen Kohlenwasserstoffen eingesetzt werden, wobei der Isobutengehalt derartiger Gemische zweckmäßigerweise nicht unter 5 Gew.-% betragen sollte. Vorzugsweise werden Kohlenwasserstoffgemische mit hohem Isobutengehalt und einem möglichst geringen Butadiengehalt verwendet, beispielsweise (i) Raffinat I, (ii) ein teilhydrierter $C_4$-Strom aus einem Steamcrakker, (iii) ein $C_4$-Strom aus einer Isobutan-Dehydrierung oder (iv) ein $C_4$-Strom aus einer

Raffinerie, beispielsweise einer FCC-Anlage.

Der Isobuten-Feedstock kann in Gegenwart des Katalysatorsystems in einem oder mehreren inerten Lösungsmitteln zum Polyisobuten umgesetzt werden. Geeignete Lösungsmittel, einzeln oder in Gemischen untereinander, sind gesättigte Kohlenwasserstoffe, beispielsweise n-Butan, n-Pentan, Cyclopentan, Methylcyclopentan, n-Hexan, Isooctan oder Methylcyclohexan, ungesättigte, unter den Reaktionsbedingungen unreaktive Kohlenwasserstoffe wie 1-Buten, cis-2-Buten oder trans-2-Buten, einzeln oder im Gemisch, wie es etwa in Raffinat II vorliegt, halogenierte Kohlenwasserstoffe wie Methylenchlorid, Chloroform und sonstige Kohlenstoffhalogenverbindungen mit geeigneten Schmelz- und Siedepunkten.

Der Isobuten-Feedstock kann geringe Mengen an Verunreinigungen wie Wasser, Carbonsäuren oder Mineralsäuren enthalten, ohne dass es zu kritischen Ausbeute- oder Selektivitätsrückgängen bei der Polymerisation kommt. Es ist aber zweckdienlich, eine Anreicherung dieser Verunreinigungen im Reaktor zu vermeiden, indem man solche Schadstoffe beispielsweise mittels Adsorption an feste Adsorbentien wie Aktivkohle, Molekularsiebe oder Ionenaustauscher aus dem Isobuten-Feedstock entfernt.

Die Polymerisation des Isobutens kann diskontinuierlich, halbkontinuierlich oder kontinuierlich durchgeführt werden. Dazu kann in an sich bekannten Reaktoren wie Rohrreaktoren, Rohrbündelreaktoren oder Rührkesseln gearbeitet werden. Bevorzugt wird das Herstellverfahren in einem Schlaufenreaktor, also einem Rohroder Rohrbündelreaktor mit stetigem Umlauf des Reaktionsguts, durchgeführt, wobei in der Regel das Volumenverhältnis von Zulauf zu Umlauf zwischen 1 : 1 und 1 : 1000, vorzugsweise zwischen 1 : 50 und 1 : 200 variieren kann. Es versteht sich von selbst, dass die Zulaufmenge der Menge des Reaktionsaustrages entspricht, sobald die Polymerisationsreaktion einen Gleichgewichtszustand erreicht hat.

Es ist zweckmäßig, sowohl beim Einleiten von vorgeformten Katalysatorkomplexen in den Reaktor als auch bei deren in situ-Darstellung im Reaktor für eine gute Durchmischung aller Reaktionspartner zu sorgen, denn hohe lokale und stationäre Katalysatorkonzentrationen im Reaktor können Anlaß zu unerwünschten Doppelbindungsverschiebungen geben. Eine gute Durchmischung erreicht man durch geeignete Einbauten wie Umlenkbleche oder durch angepasste Rohrquerschnitte, die bei geeigneter Strömungsgeschwindigkeit zu einer wirksamen, zweckdienlichen turbulenten Strömung des Reaktionsgutes im Reaktor führen.

Die Verweilzeit des Isobutens im Reaktor kann 5 Sekunden bis mehrere Stunden betragen. Vorzugsweise wird eine Verweilzeit von 1 bis 60 und besonders bevorzugt von 2 bis 30 Minuten gewählt.

Die Polymerisation wird zumeist bei Temperaturen unterhalb 0°C durchgeführt. Obwohl Isobuten noch bei wesentlich tieferen Temperaturen erfolgreich mittels des Katalysatorsystems zu hochreaktivem Polyisobuten polymerisiert werden kann, wird vorzugsweise bei Temperaturen zwischen 0 und -60, insbesondere zwischen 0 und -30 und besonders bevorzugt zwischen -5 und -20°C gearbeitet.

Vorteilhafterweise wird die Polymerisationsreaktion unter isothermen Bedingungen und im Falle einer kontinuierlichen Reaktionsführung, unter Einstellung einer konstanten, stationären Isobutenkonzentration im Reaktionsmedium betrieben. Die stationäre Isobutenkonzentration kann im Prinzip beliebig gewählt werden. Zweckmäßigerweise wird in der Regel eine Isobutenkonzentration von 0,2 bis 50 und vorzugsweise von 0,2 bis 10 Gew.-%, bezogen auf die gesamte Polymerisationsmischung, eingestellt.

Im Allgemeinen wird die Polymerisation unter Atmosphärendruck oder einem gegenüber dem Atmosphärendruck leicht erhöhten Druck ausgeführt. Die Anwendung eines erhöhten Drucks, insbesondere das Arbeiten unter dem Eigendruck des Reaktionssystems (bei Druckhaltung) kann unter verfahrenstechnischen Gesichtspunkten im Hinblick auf nachfolgende Verfahrensstufen vorteilhaft sein, sie ist jedoch für das Resultat der Polymerisation in der Regel unerheblich.

Da die Polymerisationsreaktion exotherm verläuft, wird die entstandene Wärme in der Regel mit Hilfe einer Kühlvorrichtung, die beispielsweise mit.flüssigem Ammoniak als Kühlmittel betrieben werden kann, abgeführt. Eine andere Möglichkeit der Wärmeabfuhr ist die Siedekühlung, bei der freiwerdende Wärme durch Verdampfen des Isobutens, anderer leicht flüchtiger Bestandteile des Isobuten-Feedstocks und/oder des gegebenenfalls leichtflüchtigen Lösungsmittels, welches Ethylen, Ethan, Propan oder Butan sein kann, entzogen wird, wodurch die Temperatur konstant bleibt.

Der Isobutenumsatz kann prinzipiell beliebig eingestellt werden. Es versteht sich aber von selbst, dass die Wirtschaftlichkeit des Verfahrens bei sehr niedrigen Isobutenumsätzen in Frage gestellt ist, wohingegen bei sehr hohen Isobutenumsätzen von mehr als 99 % die Gefahr von unerwünschten Nebenreaktionen, beispielsweise von Doppelbindungsverschiebungen und vor allem der Bildung unerwünschter Oligomere, immer größer wird. In der Regel liegt der Isobutenumsatz aus diesen Gründen zwischen 20 und 99,5 und vorzugsweise zwischen 90 und 99 %.

Im Austrag aus dem Reaktor (im Folgenden kurz "Austrag" genannt) liegt in der Regel der größte Teil des eingesetzten Bortrifluorids in freier Form oder als Katalysatorsystem, also als Komplex mit dem ursprünglich zugesetzten Komplexbildner vor. Es ist jedoch nicht auszuschließen, dass eine Umsetzung des Bortrifluorids mit anderen Bestandteilen des Reaktionsgemisches stattgefunden hat, etwa, bei Verwendung von Isopropanol als Komplexbildner, zu einem Isopropylboran. Wegen des normalerweise geringen Ausmaßes solcher Nebenreaktionen sollen diese jedoch

hierin nicht weiter in Betracht gezogen werden. Vielmehr soll der Einfachheit halber und in guter Annäherung an die tatsächlichen Gegebenheiten davon ausgegangen werden, dass das gesamte eingesetzte Bortrifluorid zum Zeitpunkt der erfindungsgemäßen Desaktivierung noch als solches intakt ist.

Zum erfindungsgemäßen Desaktivieren des Bortrifluorids wird der Austrag mit dem festen Desaktivator behandelt.

Diese Desaktivierung kann grundsätzlich diskontinuierlich, halbkontinuierlich oder kontinuierlich durchgeführt werden. Wird die Polymerisation des Isobutens mit Bortrifluorid kontinuierlich durchgeführt, so wird das Bortrifluorid im Austrag vorzugsweise kontinuierlich mit dem festen Desaktivator desaktiviert.

Die erfindungsgemäßen festen Desaktivatoren sind solche, die primäre Amingruppen vom Typ $R^1\text{-}NH_2$, sekundäre Amingruppen vom Typ $R^2R^3NH$, tertiäre Amingruppen vom Typ $R^4R^5R^6N$ und/oder quarternäre Ammoniumgruppen vom Typ $R^7R^8R^9R^{10}N^+$ enthalten, in denen der Substituent $R^1$ und mindestens einer der Substituenten $R^2$ und $R^3$, mindestens einer der Substituenten $R^4$ bis $R^6$ und mindestens einer der Substituenten $R^7$ bis $R^{10}$ für den restlichen festen Desaktivator ("Träger") steht. Weiterhin können die Wasserstoffatome am StickStoffatom der primären Amine ($R^1\text{-}NH_2$) und der sekundären Amine ($R^2R^3N\text{-}H$) und die Substituenten $R^2$, $R^3$, $R^4$, $R^5$, $R^6$, $R^7$, $R^8$, $R^9$ und $R^{10}$, die nicht für den Träger stehen, unabhängig voneinander die folgenden Bedeutungen haben: $C_1$- bis $C_{10}$-Alkyl wie Methyl, Ethyl, n-Propyl, n-Butyl, $C_6$- bis $C_{10}$-Aryl wie Phenyl, $C_7$- bis $C_{15}$-Arylalkyl wie Benzyl, Phenethyl, $C_1$- bis $C_8$-Alkylcarbonyl wie Acetyl, Ethoxycarbonyl.

Träger für die genannten Amingruppen und Ammoniumgruppen können unter den Reaktionsbedingungen inerte anorganische oder organische Materialien sein. Vorzugsweise verwendet man organisch-chemische Polymere, die kettenförmig aufgebaut oder die zu Ebenen oder dreidimensionalen Strukturen vernetzt sein können und die entweder nach der Polymerisation an der Oberfläche mit entsprechenden Amingruppen belegt wurden oder insbesondere solche auf Basis von ungesättigten Monomeren, die vor der Polymerisation bereits Amingruppen enthielten.

Als Polymere, die an der Oberfläche mit entsprechenden Amingruppen oder Ammoniumgruppen belegt wurden ("aminierte Polymere") kommen in Betracht: Polymere aus Acrylsäure, Methacrylsäure, Vinylsilanen oder Copolymere aus derartigen Monomeren.

Als Polymere auf Basis von ungesättigten Monomeren ("Aminpolymere"), wobei die Monomeren bereits die gewünschten Amingruppen enthalten, kommen in Betracht: Polymere aus Vinylaminen, Styrolen mit kerngebundenen Amingruppen, Acrylamid oder Copolymere aus derartigen Monomeren. Aus den so erhältlichen Polymeren sind die entsprechenden Desaktivatoren, welche quarternäre Ammoniumgruppen vom Typ $R^7R^8R^9R^{10}N^+$ enthalten, in an sich bekannter Weise durch Alkylierung der Amingruppen erhältlich.

Weitere geeignete derartige aminierte Polymere und Aminpolymere sind dem Fachmann etwa aus Ullmann's Encyclopedia of Industrial Chemistry, 5th edition, Vol. A14, Seite 393 ff. ("Ion Exchangers"), bekannt.

Aus der Gruppe der aminierten Polymere und der Aminpolymere sind schwach basische Ionentauscher auf Basis von Polyaminen für die Durchführung des erfindungsgemäßen Verfahrens ganz besonders bevorzugt.

Die benötigte Menge an den-erfindungsgemäßen festen Desaktivatoren für Bortrifluorid richtet sich nach verschiedenen Gesichtspunkten, vor allem:

- der Zahl der Bortrifluorid bindenden primären, sekundären, tertiären und/oder quarternären Stickstoffatome im verwendeten Desaktivator und

- dem Grad, bis zu dem der Gehalt an Bortrifluorid im Reaktionsaustrag abgereichert werden soll.

In der Praxis beobachtet man, dass sich der ursprünglich Bortriflourid-freie Desaktivator bei ausreichendem Bortrifluorid-Angebot in Form des Reaktoraustrags bis zu einer Sättigung mit Bortrifluorid belädt. Sein Desaktivierungsvermögen fällt also in der Regel mit anderen Worten effektiv von einem Maximum bis auf Null ab. Danach ist er durch frischen Desaktivator zu ersetzen, oder er muss regeneriert werden. Demgemäß liegt es im Ermessen des Fachmanns, in welchen Mengen er den erfindungsgemäßen Desaktivator einsetzen möchte.

Um das Volumen des Desaktivators und damit den apparativen Aufwand für die Desaktivierung des Bortrifluorids möglichst klein zu halten, sind solche festen Desaktivatoren bevorzugt, die eine große - im Sinne der erfindungsgemäßen Desaktivierung - reaktive Oberfläche aufweisen.

Handelsübliche Materialien dieser Beschaffenheit sind beispielsweise Ionenaustauscher wie sie unter den Bezeichnungen Purolite A100, Purolite A103S, Purolite A105, Purolite A830, Purolite A845 und Purolite A835 von Purolite, oder als Lewatit MP 62 WS von Bayer AG bezogen werden können.

Es können auch Gemische unterschiedlicher erfindungsgemäßer fester Desaktivatoren eingesetzt werden.

Zum Zwecke der Desaktivierung des Bortrifluorids wird der feste Desaktivator in an sich bekannter Weise mit dem Austrag in Kontakt gebracht.

Der Desaktivator kann dazu in loser Form in den Austrag oder umgekehrt der Austrag, vorzugsweise in einen Überschuss, des losen Desaktivators eingerührt werden. Man verwendet dabei vor allem Vorrichtungen, die ein schnelles und vollständiges Durchmischen gewährleisten.

Vorzugsweise wird der Desaktivator unter wirtschaftlichen Gesichtspunkten in die Form eines Bettes gebracht, und der Austrag wird durch dieses Bett gefahren.

In einer bevorzugten Ausführungsform des erfindungsgemäßen Verfahrens wird hierzu der feste Desaktivator in einen senkrecht angeordneten Reaktor gefüllt und der Austrag vorzugsweise von oben durch das Desaktivator-Bett gefahren.

In einer weiteren bevorzugten Ausführungsform wird das erfindungsgemäße Verfahren kontinuierlich durchgeführt. Insbesondere wird der feste Desaktivator dabei in zwei parallel angeordneten Absorberkolonnen vorgelegt. Die Absorberkolonnen werden abwechselnd betrieben: Während in der ersten Absorberkolonne die Desaktivierung durchgeführt wird, wird der Desaktivator in der zweiten Absorberkolonne regeneriert, oder die mit Bortrifluorid beladene Absorberkolonne wird mit frischem Desaktivator befüllt.

Die Desaktivierung des Bortrifluorids wird vorzugsweise bei der Temperatur der Polymerisation, vor allem bei 0 bis -30 und insbesondere bei 0 bis -25°C durchgeführt. Eine Desaktivierung bei einer anderen als der Reaktionstemperatur ist möglich; während der dafür erforderlichen Temperaturerhöhung oder -erniedrigung kann sich jedoch in der oben beschriebenen Weise das Reaktionsprodukt in unerwünschter Weise verändern.

Die Kontaktzeit des Austrags mit dem Desaktivator hängt unter anderem ab von der Konzentration des Bortrifluorids im Austrag, dem Gehalt an reaktiven Stickstoffatomen im Desaktivator und dem Belegungsgrad des festen Desaktivators durch das Bortrifluorid. Normalerweise erfolgt die Desaktivierung bei entsprechend ausreichender Kapazität des Desaktivators unverzüglich. Für den Fall, dass man den Desaktivator in einem senkrechten Bett anordnet und den Austrag durch dieses Bett fährt, lässt sich die erforderliche Fließgeschwindigkeit leicht errechnen und entsprechend einstellen.

Die nach der Desaktivierung verbleibende Phase ("Eluat") enthält das Polyisobuten und weiterhin normalerweise das unumgesetzte Isobuten, niedermolekulare Polymere des Isobutens und gegebenenfalls das bei der Polymerisation des Isobutens eingesetzte Lösungsmittel.

In einer weiteren bevorzugten Ausführungsform des erfindungsgemäßen Verfahrens geht man so vor. dass man die Wirksamkeit des Bortrifluorids in einem ersten Schritt überwiegend in an sich bekannter Weise, d.h. ohne Verwendung des Desaktivators vornimmt, welcher Bortrifluorid bindende primäre, sekundäre, tertiäre und/oder quarternäre Stickstoffatome aufweist, wobei man normalerweise bis auf 0,001 bis 10, vorzugsweise 0,5 bis 8 und insbesondere 1 bis 5 % der ursprünglich eingesetzten Menge des Bortrifluorids desaktiviert und zu diesem Zweck gegebenenfalls aus der Reaktionsmischung entfernt, und hebt in einem zweiten Schritt die restliche Wirksamkeit mit einem Desaktivator auf, welcher Bortrifluorid bindende primäre, sekundäre, tertiäre und/oder quarternäre Stickstoffatome aufweist. Vorzugsweise verwendet man für die erste Stufe der Desaktivierung einen flüssigen Desaktivator wie Wasser, einen Alkohol, ein Amin, ein Nitril, Natronlauge oder wäßriges Ammoniak. Wegen der durch die Vorbehandlung mit einem sonstigen Desaktivator erzielten geringeren Restmengen an Bortrifluorid werden kleineren Mengen an Desaktivator, welcher Bortrifluorid bindende primäre, sekundäre, tertiäre und/oder quarternäre Stickstoffatome ausweist benötigt, so dass deren Preis und der apparative Aufwand bei ihrer Anwendung in ein wirtschaftliches Verhältnis gesetzt werden können gegen die bekannten Nachteile der vorgeschalteten Desaktivierung nach einem der dem Fachmann bereits bekannten Verfahren.

Aus dem Eluat lassen sich geringe Restmengen Bortrifluorid gewünschtenfalls noch durch Extraktion, etwa mit Alkoholen wie Methanol oder vorzugsweise durch Waschen mit Wasser entfernen.

Im weiteren Gang der Aufarbeitung wird die organische Phase zweckmäßigerweise destillativ in nicht umgesetztes Isobuten, gegebenenfalls das Lösungsmittel, die niedermolekularen Polymere des Isobutens und das Wertprodukt Polyisobuten aufgetrennt. Das Isobuten, das Lösungsmittel und die niedermolekularen Polymeren können unabhängig voneinander oder zusammen in die Polymerisation zurückgeführt werden. Das gewünschte Polyisobuten zieht man in der Regel als Sumpfprodukt aus der Entgasung ab.

Gebrauchten festen Desaktivator wird man zumeist aus wirtschaftlichen Gründen regenerieren. In der Praxis verfährt man vor allem dort, wo man eine kontinuierliche Deaktivierung betreiben möchte, zweckmäßigerweise so, dass man die Desaktivierung mit einer zweiten Charge oder noch weiteren Chargen an festem Desaktivator fortsetzt und die Regenerierung von gebrauchtem Desaktivator vorzugsweise parallel dazu betreibt.

Die Regenerierung des Desaktivators kann in an sich bekannter Weise erfolgen, beispielsweise durch Behandeln mit verdünnter, etwa 5 %iger, Natronlauge. Bei der Verwendung wäßriger Laugen wird das am Desaktivator gebundene Bortrifluorid jedoch normalerweise vollständig hydrolysiert.

Vorzugsweise verwendet man daher für die Regenerierung des festem Desaktivators Wasser in möglichst geringen Mengen, Alkohole wie Methanol oder Ethanol oder andere Verbindungen, welche stabilere Addukte mit dem Bortrifluorid bilden als der feste Desaktivator, oder sonstige Stoffe, die das Bortrifluorid von dem festen Desaktivator verdrängen wie verdünnte Säuren, beispielsweise verdünnnte Schwefelsäure. Auf diese Weise wird das Bortrifluorid im Allgemeinen weitestgehend unzersetzt vom festen Desaktivator abgelöst. Aus dabei anfallenden wäßrigen Eluaten kann das Bortrifluorid beispielsweise mit Hilfe von hochkonzentrierter Schwefelsäure (Oleum) ausgetrieben und isoliert

werden. Für die Entfernung organischer Bestandteile aus den Eluaten bedient man sich beispielsweise der Dampfstrippung, wobei man wäßrige Eluate enthält, die wiederum mit hochkonzentrierter Schwefelsäure (Oleum) auf das enthaltene Bortrifluorid aufgearbeitet werden können.

Ein besonderer Vorteil der erfindungsgemäßen Desaktivatoren gegenüber den bekannten festen Desaktivatoren liegt darin, dass das an erstere gebundene Bortrifluorid unter den Bedingungen der Polyisobuten-Herstellung gegenüber Isobuten keine erkennbare katalytische Aktivität mehr aufweist.

Weil die Deaktivierung zudem in aller Regel bei der Polymerisationstemperatur des Isobutens durchgeführt werden kann, kann die für das Einstellen der niedrigen Temperaturen der Polymerisation aufgewandte Kälteenergie im Anschluß an die Desaktivierung besonders wirtschaftlich vor der weiteren Aufarbeitung des Reaktoraustrags beispielsweise über Wärmetauscher zurückgewonnen werden.

Beispiele

Die mittleren Molekulargewichte ($M_N$) der gemäß den Beispielen hergestellten Polymeren wurden mittels Gelpermeationschromatographie bestimmt, wobei Polyisobutene mit definierten bekannten mittleren Molekulargewichten zur Eichung verwendet wurden. Aus den erhaltenen Chromatogrammen wurde das Zahlenmittel $M_N$ nach der Gleichung

$$M_N = \frac{\Sigma\, C_i}{\Sigma \frac{C_i}{M_i}}$$

berechnet, in der $C_i$ für die Konzentration jeweils einer einzelnen Polymerspecies i im erhaltenen Polymergemisch steht und in der $M_i$ das Molekulargewicht dieser einzelnen Polymerspecies i bedeutet. Das Gewichtsmittel. $M_w$ wurde aus den erhaltenen Chromatogrammen mit Hilfe der Formel

$$M_W = \frac{\Sigma\, C_i M_i}{\Sigma\, C_i}$$

erhalten.

Die Dispersität D wurde aus dem Verhältnis von Gewichtsmittel des Molekulargewichts ($M_W$) und Zahlenmittel des Molekulargewichts ($M_N$) nach der Gleichung

$$D = \frac{M_W}{M_N}$$

errechnet.

Der Gehalt an endständigen Vinylidengruppierungen wurde mit Hilfe der $^{13}$C-NMR-Spektroskopie bestimmt, wobei als Lösungsmittel deuteriertes Chloroform und als Standard Tetramethylsilan verwendet wurde.

Beispiel 1: Herstellung von hochreaktivem Polyisobuten

Zur Herstellung eines Polyisobutens wurde gemäß der EP-A 628 575, Beispiel 1, verfahren: Der eingesetzte Isobuten-Feedstock war ein $C_4$-Schnitt folgender Zusammensetzung:

| | |
|---|---|
| Isobutan | 4,0 Gew.-% |
| n-Butan | 9,2 Gew.-% |
| 1-Buten | 29,0 Gew.-% |
| trans-2-Buten | 7,7 Gew.-% |
| cis-2-Buten | 4,5 Gew.-% |
| Isobuten | 45,4 Gew.-% |
| Butadien | <50 ppm |
| Wasser | ca. 2 ppm |

Im Verlauf von einer Stunde wurden 6000 g des obigen $C_4$-Schnittes auf der Saugseite einem Schlaufenreaktors zugeführt, der mit einer integrierten Umwälzpumpe ausgestattet war, dessen Rohrdurchmesser 4 mm und dessen Volumen 1000 ml betrug. Bezogen auf das Bortrifluorid wurde die 1,6-fache molare Menge 2-Butanol zugesetzt. Der Reaktor wurde so gekühlt, dass die Temperatur im Reaktionsmedium -15°C betrug. Die mittlere Verweilzeit des Reaktionsmediums im Reaktor lag bei 6,6 Minuten. Proben des Reaktorinhalts wurden über eine Entnahmevorrichtung, die 2 cm vor der Zuführung für die Ausgangsstoffe lag, entnommen.

Beispiele 2 bis 5: Desaktivierung und Aufarbeitung

Der feste Desaktivator wurde in einem verschließbaren, druckstabilen Probenahmeglas vorgelegt. Die Probe von 50 ml wurde innerhalb weniger Sekunden bei -15°C unter intensivem Durchmischen zugefügt und noch 30 Minuten bei dieser Temperatur weitergerührt. Die Mischung wurde in den anschließenden 60 Minuten unter Rühren mittels eines Magnetrührers in dem geschlossenen Probenahmeglas auf +20°C erwärmt. Danach wurde der Desaktivator abgetrennt und die verbliebene organische Phase mit 167 g Wasser gewaschen. Nach dem Abtrennen der wäßrigen Phase wurde das Lösungsmittel abdestilliert, und am Rückstand der Destillation wurden die in Tabelle 1 zusammengestellten analytischen Daten ermittelt.

Es bedeuten in Tabelle 1:

- $BF_3$ "Gehalt an $BF_3$ in der Probe": Es wurde die für die Umsetzung des Isobutens zugesetzte $BF_3$-Menge zugrunde gelegt
- U Umsatz in Prozent, bezogen auf eingesetztes Isobuten
- A Ausbeute an Polyisobuten, bezogen auf eingesetztes Isobuten
- Vin Anteil Polyisobuten mit Vinylidendoppelbindungen an der Polyisobuten-Gesamtausbeute
- $M_N$ Mittleres Molekulargewicht (ermittelt mittels Gelpermeationschromatographie)
- D Dispersität

Tabelle 1

| Nr. | $BF_3$ [mmol/l] | Desaktivator |  |  | U [%] | A [%] | Vin [%] | $M_n$ | D |
|---|---|---|---|---|---|---|---|---|---|
|  |  | Stoff | Menge [g] | Menge [meq.[4)]] |  |  |  |  |  |
| 1 | 19,8 | Dowex MWA-1[1)] | 5 | 12,7 | 98 | 95 | 87,6 | 981 | 1,678 |
| 2 | 19,8 | - | - | - | 99 | 95 | 82,6 | 903 | 1,806 |
| 3 | 7,1 | Lewatit 500[2)] | 5 | 12,7 | 94 | 93 | 78,1 | 2477 | 1,734 |
| 4 | 7,1 | Polyvinylalkohol[3)] | 5 | - | 98 | 93 | 78,3 | 1408 | 2,692 |

1) Schwach basischer Ionentauscher der Firma Dow Chemicals in der Amin-Form

2) Stark basischer Ionentauscher der Firma Bayer AG in der OH-Form

3) 99 % hydrolysiert, Molekulargewicht 124000-186000, Firma Aldrich

4) = Milliequivalente

Beispiel 6: Kontinuierliche Desaktivierung

Der Austrag aus Beispiel 1 wurde bei einer Fließgeschwindigkeit von 2 Liter/h bei -25 bis -5°C kontinuierlich durch eine Glaskolonne vom Innenvolumen 100 ml geleitet, die mit 50 g schwach basischem Ionentauscher Dowex

MWA-1 (Firma Dow; Aminform; 2,5 meq. reaktive Amingruppen/g) befüllt war. Das Eluat wurde literweise gesammelt. Die Analyse ergab dabei folgende Gehalte an anorganischem Fluorid in den Eluaten, wobei der Wert für den unbehandelten Austrag bei 612 mg anorganisches Fluorid pro kg Austrag lag:

| Eluat | Gesamtgehalt an anorganischem Fluorid (nach Wickbold*) [mg/kg Eluat] | Relative Abreiche- rung des Gehaltes an anorganischem Flu- orid [%] |
|---|---|---|
| 1. Eluat | 128 | 79 |
| 2. Eluat | 111 | 82 |
| 3. Eluat | 106 | 83 |
| 4. Eluat | 79 | 87 |
| 5. Eluat | 62 | 90 |
| 6. Eluat | 73 | 88 |
| 7. Eluat | 71 | 88 |
| 8. Eluat | 64 | 90 |
| 9. Eluat | 65 | 89 |
| 10. Eluat | 62 | 90 |
| 11. Eluat | 118 | 81 |
| 12. Eluat | 59 | 90 |
| 13. Eluat | 45 | 93 |
| 14. Eluat | 259 | 58 |

*Prinzip: Eindampfen und Verbrennen der jeweiligen Eluatfraktion, gefolgt von einer elektrophoretischen Fluorid-Bestimmung

Beispiel 7: Kontinuierliche Desaktivierung

Beispiel 7 wurde analog Beispiel 6 durchgeführt, jedoch mit stark basischem Ionentauscher Lewatit M 500 (Firma Bayer AG; OH-Form; 1,7 meq. reaktive Amingruppen/g) bei einer Fließgeschwindigkeit von 4 Liter/h. Der Wert für den unbehandelten Austrag lag bei 612 mg anorganisches Fluorid pro kg Austrag.

| Eluat | Gesamtgehalt an anorganischem Fluorid (nach Wickbold) [mg/kg Eluat] | Relative Abreiche- rung des Gehaltes an anorganischem Fluorid [%] |
|---|---|---|
| 1. Eluat | 159 | 85 |
| 2. Eluat | 137 | 87 |
| 3. Eluat | 122 | 88 |
| 4. Eluat | 256 | 76 |
| 5. Eluat | 95 | 91 |
| 6. Eluat | 96 | 91 |
| 7. Eluat | 94 | 91 |
| 8. Eluat | 124 | 88 |
| 9. Eluat | 120 | 89 |
| 10. Eluat | 135 | 87 |
| 11. Eluat | 158 | 85 |

Beispiel 8: Regenerierung des Desaktivators

Der gebrauchte Ionentauscher aus Beispiel 6 wurde bei 20°C nacheinander dreimal mit Wasser und siebenmal mit 5 Gew.-%iger Natronlauge in der selbigen Glaskolonne behandelt. Die Eluate wurden auf anorganisches Fluorid

und Tetrafluoroborat hin analysiert.

| Eluat | Gesamtgehalt an anorganischem Fluorid (nach Wickbold) [mg/kg Eluat] | Gesamtgehalt an Tetrafluoroborat [mg/kg Eluat] |
|---|---|---|
| Eluat von 70 ml Wasser | 600 | 590 |
| Eluat von 70 ml Wasser | 125 | 115 |
| Eluat von 70 ml Wasser | 70 | 50 |
| Eluat von 100 ml Natronlauge | 4400 | 25400 |
| Eluat von 100 ml Natronlauge | 625 | 14100 |
| Eluat von 100 ml Natronlauge | 55 | 770 |
| Eluat von 100 ml Natronlauge | <30 | 300 |
| Eluat von 100 ml Natronlauge | <30 | 275 |
| Eluat von 100 ml Natronlauge | <30 | 200 |
| Eluat von 100 ml Natronlauge | <30 | 160 |

**Patentansprüche**

1. Verfahren zur Herstellung von Polyisobutenen durch kationische Polymerisation von Isobuten oder isobutenhaltigen Kohlenwasserstoffströmen in der flüssigen Phase in Gegenwart von Bortrifluorid als Katalysator, wobei man die katalytische Wirksamkeit des Bortrifluorids zu einem gewünschten Zeitpunkt mittels eines festen Desaktivators teilweise oder vollständig aufhebt, **dadurch gekennzeichnet, dass** der feste Desaktivator Bortrifluorid bindende primäre Amingruppen vom Typ $R^1$-$NH_2$, sekundäre Amingruppen vom Typ $R^2R^3NH$, tertiäre Amingruppen vom Typ $R^4R^5R^6N$ und/oder quarternäre Ammoniumgruppen vom Typ $R^7R^8R^9R^{10}N^+$ enthält, in denen der Substituent $R^1$ und mindestens einer der Substituenten $R^2$ und $R^3$, mindestens einer der Substituenten $R^4$ bis $R^6$ und mindestens einer der Substituenten $R^7$ bis $R^{10}$ für den restlichen festen Desaktivator ("Träger") steht, welcher ein unter den Reaktionsbedingungen inertes anorganisches oder organisches Material ist, und wobei weiterhin die Wasserstoffatome am Stickstoffatom der primären Amine ($R^1$-$NH_2$) und der sekundären Amine ($R^2R^3N$-H) und die Substituenten $R^2$, $R^3$, $R^4$, $R^5$, $R^6$, $R^7$, $R^8$, $R^9$, und $R^{10,}$ die nicht für den Träger stehen, unabhängig voneinander die folgenden Bedeutungen haben: $C_{1-}$ bis $C_{10}$-Alkyl, $C_6$- bis $C_{10}$-Aryl, $C_7$- bis $C_{15}$-Arylalkyl, $C_1$- bis $C_8$-Alkylcarbonyl, Ethoxycarbonyl, und dass der feste Desaktivator im Reaktionsgemisch unlöslich ist.

2. Verfahren nach Anspruch 1, **dadurch gekennzeichnet, dass** man man die Wirksamkeit des Bortrifluorids in einem ersten Schritt überwiegend in an sich bekannter Weise aufhebt und in einem zweiten Schritt die restliche Wirksamkeit mit einem festen Desaktivator gemäß Anspruch 1 aufhebt.

3. Verfahren nach Anspruch 1 oder 2 zur Herstellung von hochreaktivem Polyisobuten mit 75 bis 100 mol-% endständiger Doppelbindungen.

4. Verfahren nach den Ansprüchen 1 bis 3 zur Herstellung von Polyisobuten mit mittleren Molekulargewichten von 300 bis 50000 Dalton.

5. Verfahren nach den Ansprüchen 1 bis 4, **dadurch gekennzeichnet, dass** man als festen Desaktivator einen Ionentauscher verwendet.

6. Verfahren nach den Ansprüchen 1 bis 5, **dadurch gekennzeichnet, dass** man ein Katalysatorsystem einsetzt, dass einen oder mehrere Alkohole umfasst.

7. Verfahren nach den Ansprüchen 1 bis 6, **dadurch gekennzeichnet, dass** man ein Katalysatorsystem einsetzt, das Methanol oder Isopropanol enthält.

8. Verfahren nach den Ansprüchen 1 bis 7, **dadurch gekennzeichnet, dass** man die katalytische Wirksamkeit des

Bortrifluorids mittels des festen Desaktivators kontinuierlich aufhebt.

## Claims

1. A process for the preparation of polyisobutenes by cationic polymerization of isobutene or isobutene-containing hydrocarbon streams in the liquid phase in the presence of boron trifluoride as a catalyst, the catalytic activity of the boron trifluoride being partially or completely eliminated at a desired time by means of a solid deactivator, wherein the solid deactivator contains boron trifluoride-binding primary amino groups of the type $R^1$-$NH_2$, secondary amino groups of the type $R^2R^3NH$, tertiary amino groups of the type $R^4R^5R^6N$ and/or quaternary ammonium groups of the type $R^7R^8R^9R^{10}N^+$, in which the substituent $R^1$ and at least one of the substituents $R^2$ and $R^3$, at least one of the substituents $R^4$ to $R^6$ and at least one of the substituents $R^7$ to $R^{10}$ are the remaining solid deactivator (carrier), which is an inert inorganic or organic material under the reaction conditions, and wherein furthermore the hydrogen atoms on the nitrogen atom of the primary amines ($R^1$-$NH_2$) and of the secondary amines ($R^2R^3N$-H) and the substituents $R^2$, $R^3$, $R^4$, $R^5$, $R^6$, $R^7$, $R^8$, $R^9$ and $R^{10}$ which are not the carrier, independently of one another, have the following meanings: $C_1$- to $C_{10}$-alkyl, $C_6$- to $C_{10}$-aryl, $C_7$- to $C_{15}$-arylalkyl, $C_1$- to $C_8$-alkylcarbonyl, ethoxycarbonyl, and wherein the solid deactivator is insoluble in the reaction mixture.

2. A process as claimed in claim 1, wherein the activity of the boron trifluoride is predominantly eliminated in a first step in a manner known per se, and the remaining activity is eliminated in a second step using a solid deactivator as claimed in claim 1.

3. A process as claimed in claim 1 or 2 for the preparation of highly reactive polyisobutene having from 75 to 100 mol% of terminal double bonds.

4. A process as claimed in claims 1 to 3 for the preparation of polyisobutene having an average molecular weight of from 300 to 50 000 Dalton.

5. A process as claimed in any of claims 1 to 4, wherein the solid deactivator used is an ion exchanger.

6. A process as claimed in any of claims 1 to 5, wherein a catalyst system which comprises one or more alcohols is used.

7. A process as claimed in any of claims 1 to 6, wherein a catalyst system which contains methanol or isopropanol is used.

8. A process as claimed in any of claims 1 to 7, wherein the catalytic activity of the boron trifluoride is continuously eliminated by means of the solid deactivator.

## Revendications

1. Procédé de préparation de polyisobutènes par polymérisation catalytique d'isobutène ou de courants d'hydrocarbures contenant de l'isobutène, en phase liquide et en présence de trifluorure de bore comme catalyseur, où l'on supprime partiellement ou complètement l'activité catalytique du trifluorure de bore à un moment souhaité à l'aide d'un désactivateur solide, **caractérisé en ce que** le désactivateur solide contient des radicaux amino primaire du type $R^1$-$NH_2$, des radicaux amino secondaire du type $R^2R^3NH$, des radicaux amino tertiaire du type $R^4R^5R^6N$ et/ou des radicaux ammonium quaternaire du type $R^7R^8R^9R^{10}N^+$, se liant au trifluorure de bore, où le substituant $R^1$ et au moins un des substituants $R^2$ et $R^3$, au moins un des substituants $R^4$ à $R^6$ et au moins un des substituants $R^7$ à $R^{10}$ représente le désactivateur solide restant (« support »), qui est un matériau inorganique ou organique, inerte dans les conditions de réaction et où d'autre part, les atomes d'hydrogène sur l'atome d'azote de l'amine primaire ($R^1$-$NH_2$) et de l'amine secondaire ($R^2R^3NH$) et les substituants $R^2$, $R^3$, $R^4$, $R^5$, $R^6$, $R^7$, $R^8$, $R^9$ et $R^{10}$, qui ne représentent pas le support, ont indépendamment l'un de l'autre, les significations suivantes : alkyle en $C_1$-$C_{10}$, aryle en $C_6$-$C_{10}$, arylalkyle en $C_7$-$C_{15}$, (alkyl en $C_1$-$C_8$)carbonyle, éthoxycarbonyle, et **en ce que** le désactivateur solide est insoluble dans le mélange réactionnel.

2. Procédé selon la revendication 1, **caractérisé en ce que** l'on supprime essentiellement l'activité du trifluorure de bore dans une première étape, de manière connue en soi et dans une deuxième étape, on supprime l'activité

résiduelle avec un désactivateur solide selon la revendication 1.

**3.** Procédé selon la revendication 1 ou 2, pour la préparation de polyisobutène très réactif avec 75 à 100% en moles de doubles liaisons terminales.

**4.** Procédé selon les revendications 1 à 3, pour la préparation de polyisobutène avec des poids moléculaires moyens allant de 300 à 50 000 Dalton.

**5.** Procédé selon les revendications 1 à 4, **caractérisé en ce que** l'on utilise comme désactivateur solide, un échangeur d'ions.

**6.** Procédé selon les revendications 1 à 5, **caractérisé en ce que** l'on met en oeuvre un système catalytique, qui comprend un ou plusieurs alcools.

**7.** Procédé selon les revendications 1 à 6, **caractérisé en ce que** l'on met en oeuvre un système catalytique, qui contient du méthanol ou de l'isopropanol.

**8.** Procédé selon les revendications 1 à 7, **caractérisé en ce que** l'on supprime en continu l'activité catalytique du trifluorure de bore à l'aide du désactivateur solide.